# FASCICULE DE BREVET EUROPEEN

(11) **EP 1 229 279 B1**
(45) Date de publication et mention de la délivrance du brevet: **27.04.2005**
(21) Numéro de dépôt: 02360034.9
(22) Date de dépôt: 18.01.2002
(51) Int. Cl.: F16K 37/00, F16K 27/07, G01K 1/14

(54) **Vanne comportant un logement intérieur pour une sonde permettant l'extraction de celle-ci sans démontage**
Ventil mit innerer, entfernenbarer Sonde
Valve with removable inner probe

(30) Priorité: 02.02.2001 FR 0101417
(43) Date de publication de la demande: 07.08.2002
(73) Titulaire: DE DIETRICH PROCESS SYSTEMS, 67110 Zinswiller (FR)
(72) Inventeur: Cronimus, Georges, 67110 Gumbrechtshoffen (FR)
(74) Mandataire: Metz, Paul

(56) Documents cités:
- US-A- 3 555 414
- US-A- 3 938 544
- US-A- 4 822 570

## Description

La présente invention concerne un organe de fermeture d'une vanne, comportant un logement intérieur qui présente une ouverture d'accès permettant d'y insérer ou d'en extraire une sonde d'un appareil de mesure ou de détection, par exemple une sonde de mesure de température, sans avoir à démonter l'organe de fermeture, ni la vanne, tout en maintenant la vanne fermée.

Sans pour autant se rendre limitatif, l'organe de fermeture selon l'invention est préférentiellement destiné à une vanne de vidange d'un réacteur, d'une citerne, d'une colonne ou autre contenant.

Afin de contrôler une réaction chimique, il est souvent capital de connaître la température du milieu réactionnel se trouvant à l'intérieur du réacteur. Une telle information permet non seulement d'agir rétroactivement sur les moyens de chauffage ou de refroidissement du réacteur pour obtenir ou maintenir la température souhaitée, mais également de s'assurer que la réaction chimique s'effectue correctement. En effet, une brusque montée en température traduit souvent une réaction qui s'emballe et la détection rapide d'une telle situation peut être cruciale pour la sécurité des employés, de l'équipement et de l'environnement.

Pour cette raison, les réacteurs ou autres contenants chimiques sont souvent équipés d'un dispositif permettant de mesurer la température du contenu.

Afin d'éviter les problèmes d'étanchéité, de construction et de coût de réalisation des systèmes classiques de mesure de température au moyen d'une sonde traversante entourée d'une gaine thermométrique et placée dans une tubulure supplémentaire du réacteur, un dispositif de mesure plus satisfaisant, utilisant une sonde de mesure de température de type contact, a été proposé dans l'art antérieur.

Dans ce dispositif, la sonde de mesure de température est maintenue en contact contre une partie localement amincie de la paroi du réacteur et mesure la température du contenu du réacteur à travers la paroi. La réalisation d'une ouverture traversant jusqu'au coeur du réacteur est ainsi évitée.

De façon classique, cette sonde de mesure de température par contact est souvent placée au niveau de la vanne de vidange du réacteur. Elle est alors montée à l'intérieur de l'organe de fermeture de la vanne de vidange, cet organe étant mobile entre une position haute et une position basse correspondant respectivement à l'ouverture et à la fermeture de la vanne.

La sonde peut être intégrée par construction à l'intérieur de la tête d'obturation de l'organe de fermeture à proximité de sa paroi supérieure ou être logée dans un espace intérieur creux de la tête d'obturation contre la surface interne de sa paroi supérieure. Les fils conducteurs reliant cette sonde à l'appareil de mesure passent en général dans la tige de l'organe de fermeture.

Cet emplacement confère les divers avantages suivants.

Tout d'abord, on utilise un orifice du réacteur déjà existant. Il n'est donc pas nécessaire d'effectuer de modifications coûteuses du réacteur. Seul, l'organe de fermeture de la vanne doit être adapté, ce qui est bien moins onéreux.

Par ailleurs, la vanne de vidange constituant le point le plus bas du contenant, la sonde est toujours entourée de liquide quel que soit le niveau de remplissage du contenant. Elle est placée dans une zone éloignée du flux thermique de surface et dans laquelle le milieu réactionnel est homogène car en général largement brassé par un agitateur. De plus la tête d'obturation s'enfonçant légèrement à l'intérieur du réacteur, la température mesurée n'est pas faussement accrue ou diminuée par la proximité du milieu extérieur ou d'une éventuelle double enveloppe. La température mesurée est ainsi représentative de celle de l'ensemble du contenu du réacteur.

Du fait du développement des normes de qualité du type ISO, ces sondes de mesures de température doivent répondre à de nouvelles exigences. Elles doivent être régulièrement étalonnées, ce qui nécessite le retrait de leur position d'utilisation au sein du réacteur.

Or avec le système de l'art antérieur, ces retraits fréquents sont problématiques. En effet, pour pouvoir retirer la sonde de son emplacement, il est actuellement nécessaire de démonter entièrement la vanne de vidange afin de pouvoir sortir l'organe de fermeture renfermant la sonde. Le réacteur doit évidemment avoir été complètement vidé préalablement à la réalisation de ces opérations.

Un simple ré-étalonnage de la sonde de mesure de température est de ce fait synonyme d'un à deux jours d'arrêt de la production afin de pouvoir, tout en respectant les normes de sécurité, vider entièrement le réacteur, le nettoyer, démonter la vanne de vidange, son organe de fermeture, puis la sonde de mesure, procéder à l'étalonnage de celle-ci, remonter les différents éléments, remplir à nouveau le réacteur et relancer la production. Une simple opération de routine devient de ce fait extrêmement pénalisante et particulièrement incompatible avec les soucis de rentabilité de la production industrielle.

Le but de la présente invention, est de permettre un accès facile de l'extérieur à la sonde de mesure de température positionnée dans l'organe de fermeture mobile de la vanne de vidange, pour pouvoir la retirer et la remettre en place de manière rapide et aisée, sans avoir à démonter la vanne et son organe de fermeture et sans interférer avec le déroulement de la réaction en cours dans le réacteur.

Pour résoudre ce problème technique, le principe de la présente invention consiste à prévoir un organe de fermeture d'une vanne, notamment une vanne de vidange, comportant un logement intérieur destiné à contenir la sonde ou le détecteur d'un appareil de mesure ou de détection, qui présente une ouverture située dans une partie accessible de l'organe de fermeture lorsque celui-ci est en position d'utilisation dans la vanne, donnant accès à son logement intérieur et permettant d'y insérer ou d'en extraire la sonde ou le détecteur sans démontage préalable de la vanne ou de son organe de fermeture.

Une sonde de mesure de température par contact à tige flexible peut ainsi être facilement introduite dans le logement intérieur de l'organe de fermeture selon l'invention au moyen de cette ouverture d'accès, jusqu'à entrer en contact avec la paroi supérieure de la tête d'obturation de l'organe de fermeture, de préférence localement amincie, à travers laquelle elle mesure la température du milieu réactionnel.

Elle peut de la même façon être retirée de manière simple et rapide, pour être remplacée, contrôlée ou étalonnée par exemple, sans affecter le contenu du réacteur et sans requérir le démontage/remontage de la vanne ou de son organe de fermeture.

Le dispositif selon l'invention est ainsi particulièrement avantageux, car il permet de gagner un temps précieux tout en continuant à utiliser un système classique de mesure de température par sonde de contact disposée dans l'organe de fermeture de la vanne de vidange.

L'organe de fermeture selon l'invention est facilement réalisable et guère plus onéreux que les organes de fermeture selon l'art antérieur. Il peut être monté sur une vanne quelconque, de vidange ou d'une autre nature, et équiper tout type de réacteurs, colonnes, citernes, contenants ou analogues. Par ailleurs, la plupart des sondes existantes de mesure ou de détection par contact peuvent y être facilement adaptées.

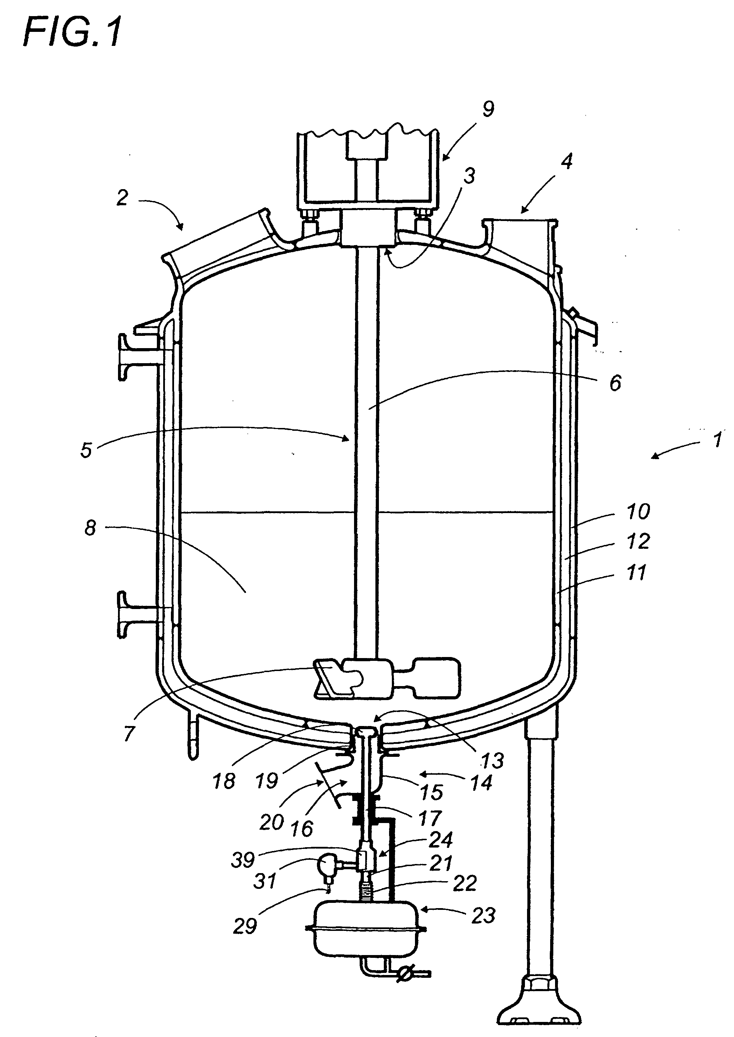

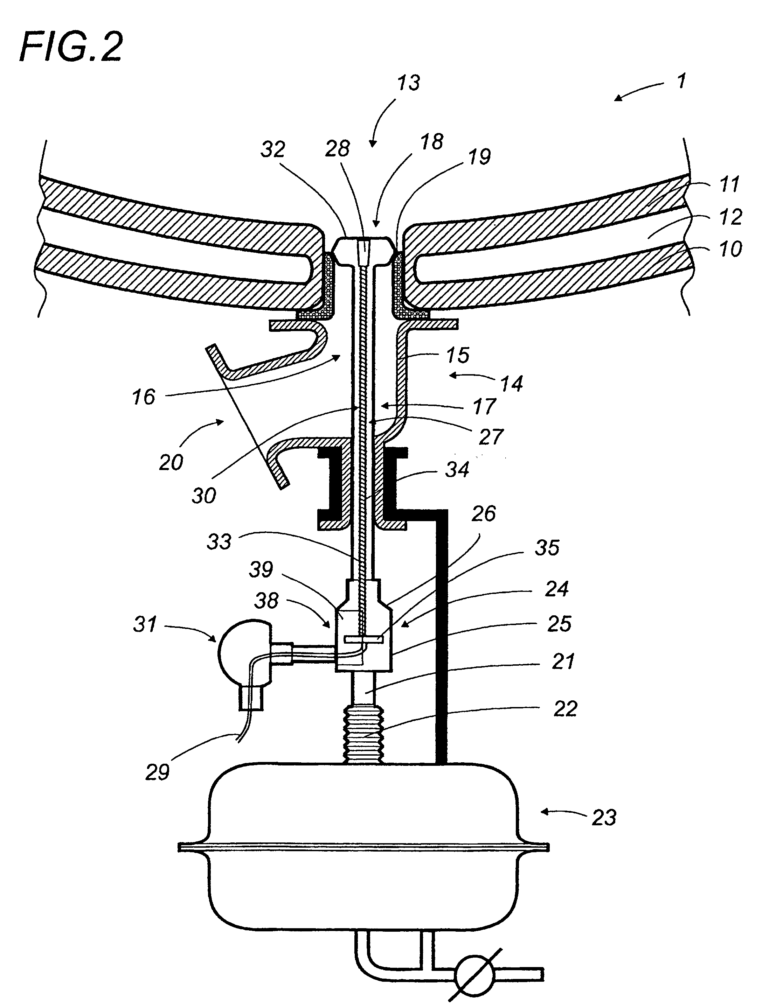

D'autres caractéristiques et avantages de l'invention apparaîtront à la lecture de la description détaillée qui va suivre, description faite en référence aux dessins annexés, dans lesquels :
. la figure 1 est une vue d'ensemble en coupe longitudinale d'un réacteur chimique dont la vanne de vidange est équipée d'un organe de fermeture selon l'invention ;
. la figure 2 est un agrandissement vu en coupe longitudinale de la partie inférieure du réacteur de la figure 1, illustrant plus particulièrement la vanne de vidange et son organe de fermeture mobile renfermant une sonde de mesure de température extractible sans démontage de la vanne conformément à l'invention ;
. les figures 3 à 6 sont des vues schématiques en perspective de la partie inférieure de l'organe de fermeture selon l'invention illustrant les différentes étapes de l'extraction de la sonde de mesure sans démontage de la vanne : la porte d'accès latéral de l'organe de fermeture étant fermée sur la figure 3, la porte d'accès latérale étant ouverte et la sonde en position d'utilisation à l'intérieur du logement de l'organe de fermeture sur la figure 4, la sonde étant partiellement puis totalement extraite de l'organe de fermeture sur les figures 5 et 6.

L'organe de fermeture selon la présente invention va maintenant être décrit de façon détaillée en référence aux figures 1 à 6 illustrant un mode préférentiel de réalisation de l'invention. Les éléments équivalents représentés sur les différentes figures porteront les mêmes références numériques.

La première figure illustre schématiquement un réacteur chimique 1 percé de trois ouvertures supérieures 2, 3 et 4 pouvant servir à introduire les différents réactifs, solvants et catalyseurs ou à plonger divers instruments ou accessoires (agitateur, brise-lames, sondes, organes de prélèvement...) dans le réacteur 1.

Le réacteur 1 est équipé d'un agitateur mécanique 5 dont la tige 6 traverse l'ouverture centrale 3 et plonge vers la partie inférieure du réacteur. La tige 6 se termine par un ensemble de trois pales inclinées 7 brassant le contenu 8 du réacteur 1 lorsque la tige est entraînée en rotation par un moteur d'entraînement 9 disposé à l'extérieur du réacteur.

Une deuxième paroi 10 peut entourer la paroi interne 11 du réacteur 1 à une certaine distance de celle-ci de manière à ménager entre ces deux parois un espace clos 12 destiné à recevoir un fluide caloporteur chaud ou froid afin de réguler la température interne du réacteur selon le principe bien connu de la double enveloppe.

Afin de pouvoir résister aux agressions d'un milieu réactionnel 8 très corrosif, la surface interne du réacteur 1 ainsi que toutes les surfaces pouvant se retrouver en contact avec ce milieu réactionnel peuvent éventuellement être revêtues d'une couche protectrice émaillée.

De manière classique, le réacteur 1 comporte au niveau de son point le plus bas un orifice 13 équipé d'une vanne de vidange 14 par exemple à clapet, permettant de le vider entièrement de son contenu.

La vanne de vidange 14 comporte un corps de vanne 15 fixe et un organe de fermeture 16 mobile dans le corps de vanne entre une position supérieure d'ouverture et une position inférieure de fermeture de la vanne de vidange 14. L'organe de fermeture 16 comporte une tige 17 et une tête d'obturation 18.

En position inférieure de fermeture, représentée sur les figures 1 et 2, la tête d'obturation 18 vient en appui contre la partie supérieure d'un siège de vanne 19 interposé entre l'orifice 13 du réacteur et le corps 15 de la vanne de vidange, assurant ainsi une fermeture étanche de la vanne de vidange 14 du réacteur 1.

Le siège de vanne 19 peut être réalisé par exemple en un polymère fluoré, tel qu'une matière téflonée et de préférence en téflon verré massif ou en téflon armé. Il peut ainsi résister aux agressions du milieu et assurer, du fait de son écrasement, une parfaite étanchéité lorsque la tête d'obturation de l'organe mobile de fermeture, en position basse, appuie sur celui-ci.

En position supérieure d'ouverture, non représentée, la tête d'obturation 18 de l'organe de fermeture mobile 16 est déplacée vers le haut, dégageant ainsi un chemin d'évacuation pour le liquide 8 contenu dans le réacteur 1 qui passe le long du siège 19 puis du corps 15 de la vanne 14 jusqu'à un orifice d'évacuation 20.

Pour des raisons de sécurité, la vanne de vidange 14 peut être suivie d'un robinet d'obturation non représenté situé en aval de l'organe de fermeture 16 selon l'invention.

Le déplacement de l'organe de fermeture entre les positions d'ouverture et de fermeture est provoqué par le mouvement d'un piston 21 relié par un soufflet 22 à un actionneur 23 pneumatique ou autre.

Les tiges de l'organe de fermeture 16 et du piston 21 de l'actionneur 23 sont disposées dans le prolongement l'une de l'autre et sont reliées au moyen d'une pièce d'accouplement 24 située à la base de la tige 17 de l'organe de fermeture 16. Cette pièce d'accouplement 24 présente de préférence une partie inférieure sensiblement cylindrique 25 prolongée par une partie supérieure sensiblement conique 26.

Pour des raisons techniques ou de construction, la tige du piston 21 de l'actionneur n'est pas forcément alignée avec celle de l'organe de fermeture 16. Elle peut être légèrement désaxée ou faire l'objet d'un renvoi de mouvement. De la même façon, l'actionneur est mis en oeuvre par une énergie quelconque qui n'est pas forcément pneumatique.

Afin de pouvoir mesurer la température du milieu réactionnel 8, le réacteur 1 est équipé d'une sonde 27 de mesure de température comprenant un capteur thermosensible 28, par exemple un thermocouple ou tout autre élément thermosensible, relié par des fils conducteurs 29 à un appareil de mesure (non représenté) situé à l'extérieur du réacteur.

Il peut s'agir également d'un détecteur ou d'un capteur de détecteur.

La sonde ou le détecteur 27 est placé dans un logement creux 30 ménagé à l'intérieur de l'organe de fermeture 16, le capteur thermosensible 28 étant disposé à l'intérieur de la tête d'obturation 18 et les fils conducteurs 29 passant dans la tige 17 de l'organe de fermeture 16.

Les fils conducteurs 29 passent dans la tige 17 de l'organe de fermeture 16, dans la pièce d'accouplement 24, puis dans un bornier 31 relié de préférence transversalement à la pièce d'accouplement 24. Ce bornier 31 permet de réaliser les différentes connexions électriques ou autres entre les dispositifs internes et les appareils extérieurs au réacteur. Il permet notamment de relier les fils conducteurs 29 de la sonde ou du détecteur 27 à ceux provenant de l'appareil de mesure de la température. Le bornier 31 s'ouvre afin de faciliter les branchements.

La sonde ou le détecteur 27 étant une sonde de mesure de température par contact, le capteur 28 est positionné contre la surface interne de la paroi supérieure 32 de la tête d'obturation 18 de l'organe de fermeture, de préférence au niveau d'une diminution locale et progressive de l'épaisseur de cette paroi.

Le logement 30 est aménagé de façon à pouvoir maintenir la sonde 27 en position de mesure ou de détection et peut comporter pour cela un moyen de maintien quelconque.

Dans le mode de réalisation représenté, le capteur 28 est prolongé par une gaine flexible 33 à l'intérieur de laquelle passent les fils 29. Cette gaine est constituée d'un enroulement de spires 34 comprimables et se terminant par une collerette d'appui 35 sensiblement circulaire.

Lorsque la sonde 27 est positionnée dans le logement intérieur 30 de l'organe de fermeture 16, cette gaine flexible 33 s'étend sur sensiblement toute la longueur de la tige 17 de l'organe de fermeture. La collerette d'appui 35 peut alors être engagée dans une rainure 36 ménagée dans la paroi latérale du logement intérieur 30, de préférence dans la paroi latérale intérieure 37 de la pièce d'accouplement 24.

La longueur de la gaine 33, les formes et dimensions de la collerette d'appui 35 et de la rainure 36 sont prévues de manière que la collerette 35 et la rainure 36 coopèrent, afin de maintenir la sonde 27 dans le logement 30 et d'assurer le plaquage du capteur 28 contre la paroi supérieure 32 de la tête d'obturation 18 de l'organe de fermeture au moyen de la compression élastique des spires 34 de la gaine 33 ou celle d'un ressort à spires jointives.

Conformément à l'invention, l'organe de fermeture 16 présente une ouverture 38 procurant un accès latéral à son logement intérieur 30. Cette ouverture d'accès 38 est située dans un endroit accessible de l'organe de fermeture 16 lorsque celui-ci est monté dans la vanne 14 en position d'utilisation. Dans ce mode préférentiel de réalisation, cette ouverture 38 est réalisée au niveau de la pièce d'accouplement 24 située à la base de la tige 17 de l'organe de fermeture.

Avantageusement, l'ouverture 38 peut être obturée de façon temporaire lorsqu'elle n'est pas utilisée. Dans l'exemple de réalisation illustré, l'ouverture d'accès 38 est obturée par une porte 39 solidarisée à la pièce d'accouplement 24 de manière amovible par exemple au moyen de vis 40.

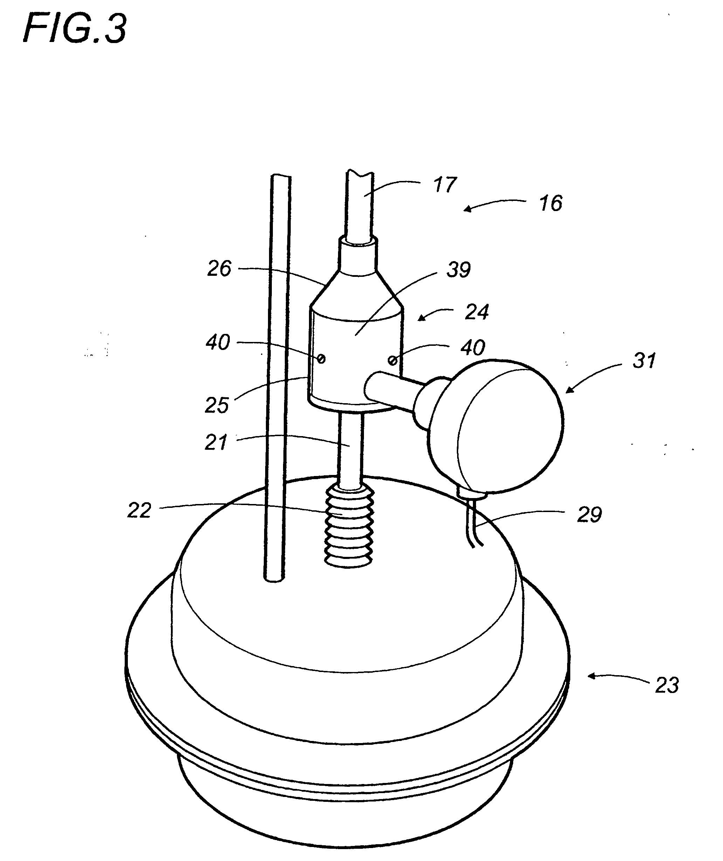

Grâce à l'organe de fermeture selon l'invention, la sonde 27 peut être facilement mise en place ou retirée du logement intérieur 30 sans qu'il soit nécessaire de démonter la vanne de vidange 14 et son organe de fermeture 16, ceci sans relâcher la force de fermeture de la vanne. Les différentes étapes de l'extraction de la sonde 27 ont été schématiquement représentées sur les figures 3 à 6.

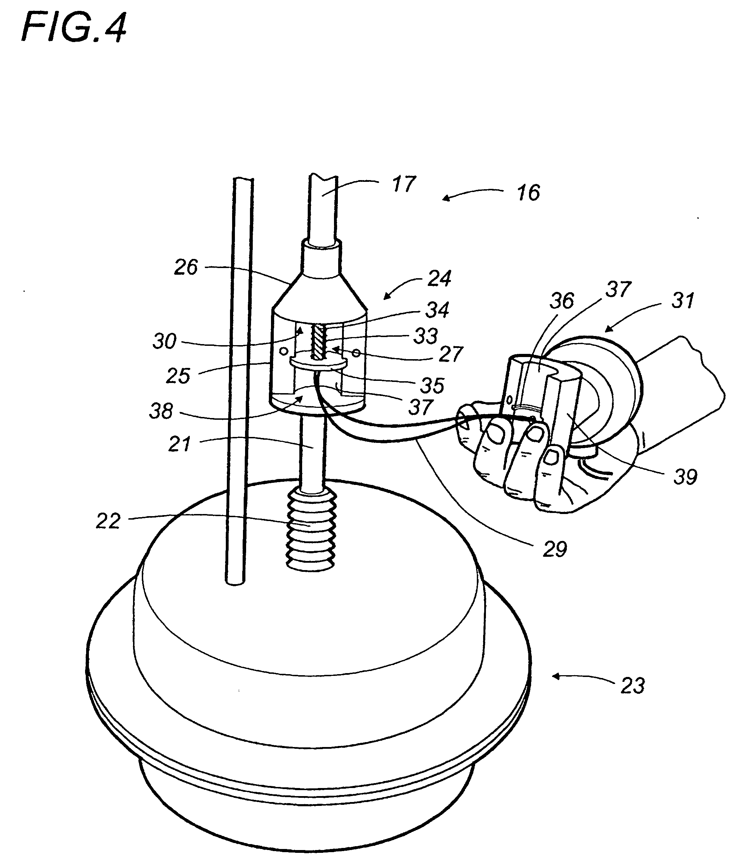

Pour extraire la sonde 27, il suffit tout d'abord de dévisser les vis 40 puis de retirer la porte 39 pour dégager l'ouverture d'accès latéral 38 de la pièce d'accouplement 24. On se trouve alors dans la configuration de la figure 4 et l'on a accès à la partie inférieure du logement intérieur 30 de l'élément de fermeture 16.

De façon préférentielle, le bornier 31 est relié à la pièce d'accouplement 24 au niveau de sa porte latérale 39. Le bornier 31 est ainsi retiré en même temps que la porte 39, ce qui permet de dégager plus facilement les fils conducteurs 29.

La collerette d'appui 35 de la sonde 27 est ensuite dégagée de la rainure circulaire 36 de la paroi latérale intérieure 37 de la pièce d'accouplement 24. Les spires 34 de la gaine 33 se décompriment.

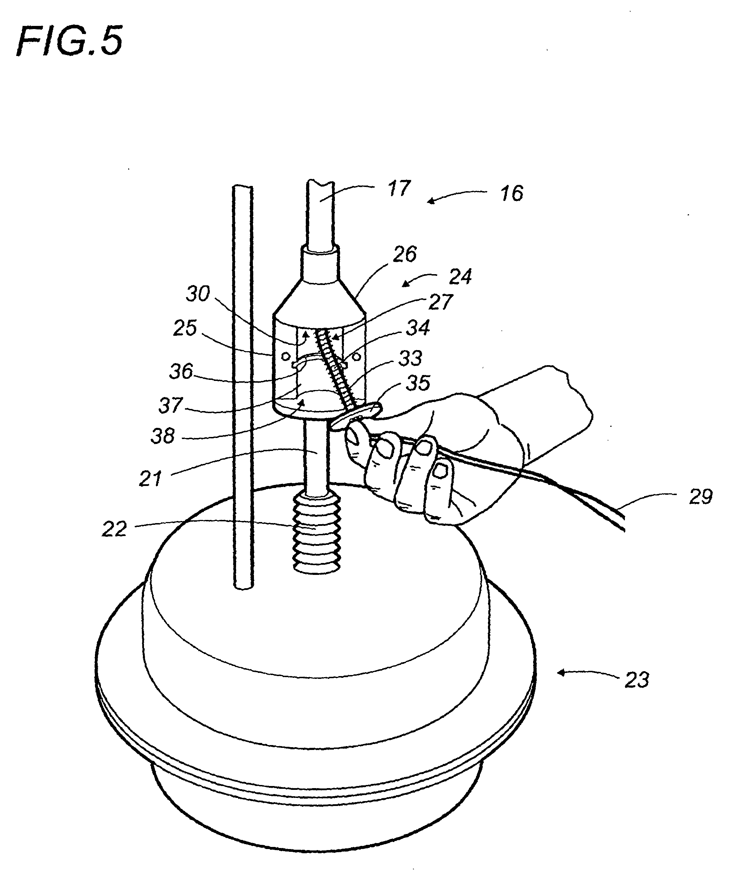

Du fait de la flexibilité de la gaine 33, la partie inférieure de la sonde 27 peut être extraite de la pièce d'accouplement 24 comme illustré sur la figure 5. Cette opération peut être encore facilitée par la forme préférentielle sensiblement conique de la partie supérieure 26 de la pièce d'accouplement 24.

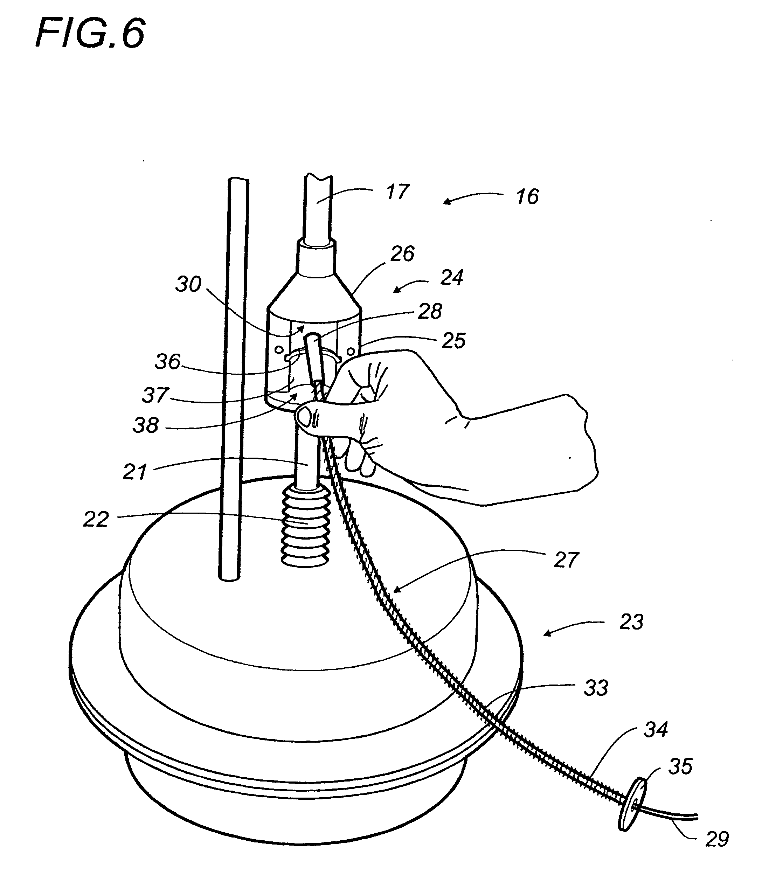

Il suffit ensuite de faire coulisser la sonde dans le logement intérieur 30 de l'organe de fermeture 16 jusqu'à ce qu'elle soit entièrement dégagée comme sur la figure 6.

L'opération de retrait de la sonde est donc extrêmement facile et rapide. Elle ne requiert aucun démontage important et n'interfère en aucune façon avec le fonctionnement du réacteur ou de sa vanne de vidange qui peut se trouver en position ouverte ou fermée.

La mise en place de la sonde 27 se fait de la même façon que son retrait, les étapes décrites précédemment étant exécutées en sens inverse.

La gaine flexible 33 doit cependant être suffisamment rigide pour permettre la progression par coulissement de la sonde 27 dans le logement 30 de l'organe de fermeture, ainsi que son immobilisation au moyen de la compression des spires 34.

Il doit être bien compris que l'invention n'est pas limitée à l'exemple de réalisation illustré et décrit précédemment.

L'organe de fermeture selon l'invention peut contenir tout type de sonde de mesure ou de détection, ou tout autre élément par exemple thermosensible devant être périodiquement retiré et remis en place, le logement intérieur 30 étant alors adapté à cet élément.

L'organe de fermeture peut être monté sur tout type de vanne et pas seulement sur les vannes de vidange à clapet.

Cette vanne peut équiper un réacteur quelconque, à simple ou double enveloppe, à serpentins, émaillé ou non et comportant un nombre quelconque d'orifices.

De la même façon, l'organe de fermeture selon l'invention n'est pas forcément installé sur un réacteur chimique, mais peut être utilisé sur tout type de contenant tel que par exemple, un réservoir, une citerne, une colonne ou autre et dans les domaines d'application les plus variés.

Cette invention concerne non seulement une sonde thermosensible, mais tout type de capteur, de détecteur ou d'élément quelconque destiné à fournir une information. Il peut s'agir d'un objectif ou d'un capteur optique permettant la vision du volume intérieur.

## Revendications

1. Organe de fermeture d'une vanne (14), notamment une vanne de vidange, équipant un contenant tel qu'un réacteur chimique (1), une citerne, une colonne ou autre, cet organe de fermeture (16) étant mobile entre une position d'ouverture et une position de fermeture de la vanne (14) et comportant un logement intérieur (30) destiné à contenir une sonde ou un détecteur (27) d'un appareil de mesure ou de détection, **caractérisé en ce qu'**il présente une ouverture (38) située dans une partie accessible de l'organe de fermeture lorsque celui-ci est en position d'utilisation dans la vanne, donnant accès à son logement intérieur et permettant d'y insérer ou d'en extraire la sonde ou le détecteur (27) sans démontage préalable de la vanne ou de l'organe de fermeture et sans altérer l'étanchéité de la vanne.

2. Organe de fermeture selon la revendication 1 **caractérisé en ce que** la vanne (14) est une vanne à clapet.

3. Organe de fermeture selon l'une quelconque des revendications précédentes **caractérisé en ce que** la vanne (14) est une vanne de vidange.

4. Organe de fermeture selon l'une quelconque des revendications précédentes **caractérisé en ce qu'**il comporte une tige (17) et une tête d'obturation (18).

5. Organe de fermeture selon l'une quelconque des revendications précédentes **caractérisé en ce que** son déplacement entre les positions d'ouverture et de fermeture est provoqué par le mouvement d'un piston (21) commandé par un actionneur (23).

6. Organe de fermeture selon les revendications 4 et 5 **caractérisé en ce que** sa tige (17) et celle du piston (21) de l'actionneur (23) sont reliées au moyen d'une pièce d'accouplement (24).

7. Organe de fermeture selon la revendication précédente **caractérisé en ce que** la pièce d'accouplement (24) présente une partie inférieure sensiblement cylindrique (25) prolongée par une partie supérieure sensiblement conique (26).

8. Organe de fermeture selon la revendication 6 ou la revendication 7 **caractérisé en ce que** l'ouverture (38) donnant accès au logement intérieur (30) est réalisée au niveau de la pièce d'accouplement (24).

9. Organe de fermeture selon l'une quelconque des revendications précédentes **caractérisé en ce que** l'ouverture (38) peut être obturée de façon temporaire lorsqu'elle n'est pas utilisée.

10. Organe de fermeture selon la revendication précédente **caractérisé en ce que** l'ouverture (38) est obturée temporairement par une porte (39).

11. Organe de fermeture selon la revendication précédente **caractérisé en ce qu'**un bornier (31) est relié à la porte latérale (39).

12. Organe de fermeture selon l'une quelconque des revendications précédentes **caractérisé en ce que** le logement (30) comporte un moyen de maintien (36) susceptible de maintenir la sonde (27) en position de mesure ou de détection.

13. Organe de fermeture selon la revendication précédente **caractérisé en ce que** le moyen de maintien est une rainure (36) ménagée dans la paroi latérale du logement intérieur (30).

14. Organe de fermeture selon l'une quelconque des revendications précédentes **caractérisé en ce que** la sonde (27) est une sonde de mesure de température de type contact.

15. Organe de fermeture selon la revendication 1 **caractérisé en ce que** la sonde (27) comporte un élément capteur (28) et des fils conducteurs (29) et **en ce que** l'élément capteur (28) est disposé à l'intérieur de la tête d'obturation (18) et les fils conducteurs (29) passent dans la tige (17) de l'élément de fermeture (16) lorsque la sonde est positionnée dans le logement (30).

16. Organe de fermeture selon la revendication précédente **caractérisé en ce que** l'élément capteur ou détecteur (28) est disposé contre la surface interne de la paroi supérieure (32) de la tête d'obturation (18) de l'organe de fermeture (16) lorsque la sonde (27) est positionnée dans le logement (30).

17. Organe de fermeture selon la revendication 15 **caractérisé en ce que** l'élément capteur ou détecteur (28) est prolongé par une gaine flexible (33), à l'intérieur de laquelle passent les fils (29), cette gaine étant constituée d'un enroulement de spires (34) comprimables.

18. Organe de fermeture selon la revendication précédente **caractérisé en ce que** la gaine (33) se termine par une collerette d'appui (35).

19. Organe de fermeture selon les revendications 13, 16, 17 et 18 **caractérisé en ce que** la collerette d'appui (35) et la rainure (36) coopèrent afin de maintenir la sonde (27) dans le logement (30) et d'assurer le plaquage de l'élément capteur ou détecteur (28) contre la paroi supérieure (32) de la tête d'obturation (18) de l'organe de fermeture au moyen de la compression élastique des spires (34) de la gaine (33).

## Claims

1. A closing device for a valve (14), specifically a drainage valve, equipping a container such as a chemical reactor (1), a storage tank, a column or other container, said closing device (16) moving between a position that opens the valve and a position that closes the valve (14), and comprising an interior housing (30) designed to hold a probe or a detector (27) of a measurement or detection apparatus, **characterized in that** it has an opening (38) located in a portion of the closing device that is accessible when the device is in the operating position inside the valve, offering access to its interior housing and allowing the probe or the detector (27) to be inserted or removed without any need to previously disassemble the valve or the closing device, and without altering the valve seal.

2. A closing device according to claim 1 **characterized in that** the valve (14) is a flap valve.

3. A closing device according to any one of the preceding claims **characterized in that** the valve (14) is a drainage valve.

4. A closing device according to any one of the preceding claims **characterized in that** it comprises a shaft (17) and a blocking head (18).

5. A closing device according to any one of the preceding claims **characterized in that** it is displaced between open and closed positions by the movement of a piston (21) controlled by an actuator (23).

6. A closing device according to claims 4 and 5 **characterized in that** is shaft (17) and the shaft of the piston (21) of the actuator (23) are connected by means of a coupling element (24).

7. A closing device according to the preceding claim **characterized in that** the coupling (24) has a generally cylindrical lower portion (25) extending into a generally conical upper portion (26).

8. A closing device according to claim 6 or claim 7 **characterized in that** the opening (38) offering access to the interior housing (30) is formed near the coupling (24).

9. A closing device according to any one of the preceding claims **characterized in that** the opening (38) may be temporarily closed when not in use.

10. A closing device according to the preceding claim **characterized in that** the opening (38) is temporarily closed by a door (39).

11. A closing device according to the preceding claim **characterized in that** a connector block (31) is connected to the lateral door (39).

12. A closing device according to any one of the preceding claims **characterized in that** the housing (30) comprises a support element (36) capable of maintaining the probe (27) in position for measurement or detection.

13. A closing device according to the preceding claim **characterized in that** the support element is a groove (36) formed in the lateral wall of the interior housing (30).

14. A closing device according to any one of the preceding claims **characterized in that** the probe (27) is a contact type temperature measurement probe.

15. A closing device according to claim 1 **characterized in that** the probe (27) comprises a sensor element (28) and conductive wires (29) and **in that** the sensor element (28) is located inside the blocking head (18) and the conductive wires (29) pass through the shaft (17) of the closing element (16) when the probe is positioned inside the housing (30).

16. A closing device according to the preceding claim **characterized in that** the sensor or detector element (28) is located against the internal surface of the upper wall (32) of the blocking head (18) of the closing device (16) when the probe (27) is positioned inside the housing (30).

17. A closing device according to claim 15 **characterized in that** the sensor or detector element (28) extends into a flexible casing (33), with the wires (29) passing through its interior, said casing consisting of a coil of compressible spirals (34).

18. A closing device according to the preceding claim **characterized in that** the casing (33) terminates in a contact ring (35).

19. A closing device according to claims 13, 16,17 and 18 **characterized in that** the contact ring (35) and the groove (36) cooperate to maintain the probe (27) inside the housing (30) and to ensure that the sensor or detector element (28) remains pressed against the upperwall (32) of the blocking head (18) of the closing device through the elastic compression of the spirals (34) on the casing (33).

## Patentansprüche

1. Schließorgan eines Ventils (14), insbesondere eines Auslaufventils, zur Ausstattung eines Behälters, wie eines chemischen Reaktors (1), eines Tanks, einer Kolonne oder dergleichen, wobei das Schließorgan (16) zwischen einer Öffnungsposition und einer Schließposition des Ventils (14) verlagerbar ist und einen inneren Aufnahmeraum (30) aufweist, welcher zur Aufnahme einer Sonde oder eines Detektors (27) einer Meß- oder Detektionseinrichtung vorgesehen ist, **dadurch gekennzeichnet, daß** es eine Öffnung (38) aufweist, welche an einem zugänglichen Abschnitt des Schließorgans angeordnet ist, wenn sich dieses in der Betriebsposition in dem Ventil befindet, welche für einen Zugang zu seinem inneren Aufnahmeraum sorgt und es ermöglicht, die Sonde oder den Detektor (27) hierin einzuführen oder hieraus auszuführen, ohne vorher das Ventil oder das Schließorgan zu demontieren und ohne die Dichtigkeit des Ventils zu beeinträchtigen.

2. Schließorgan nach Anspruch 1, **dadurch gekennzeichnet, daß** das Ventil (14) ein Klappenventil ist.

3. Schließorgan nach einem der vorangehenden Ansprüche, **dadurch gekennzeichnet, daß** das Ventil (14) ein Auslaufventil ist.

4. Schließorgan nach einem der vorangehenden Ansprüche, **dadurch gekennzeichnet, daß** es einen Schaft (17) und einen Verschlußkopf (18) aufweist.

5. Schließorgan nach einem der vorangehenden Ansprüche, **dadurch gekennzeichnet, daß** seine Verlagerung zwischen der Öffnungs- und Schließposition durch die Bewegung eines Kolbens (21) verursacht wird, welcher von einem Betätigungsglied (23) gesteuert ist.

6. Schließorgan nach Anspruch 4 oder 5, **dadurch gekennzeichnet, daß** sein Schaft (17) und der des Kolbens (21) des Betätigungsgliedes (23) mittels eines Kupplungsstückes (24) miteinander verbunden sind.

7. Schließorgan nach dem vorangehenden Anspruch, **dadurch gekennzeichnet, daß** das Kupplungsstück (24) einen unteren, im wesentlichen zylindrischen Abschnitt (25) aufweist, welcher von einem oberen, im wesentlichen konischen Abschnitt (26) verlängert ist.

8. Schließorgan nach Anspruch 6 oder 7, **dadurch gekennzeichnet, daß** die Öffnung (38), welche für einen Zugang zu dem inneren Aufnahmeraum (30) sorgt, auf dem Niveau des Kupplungsstückes (24) gebildet ist.

9. Schließorgan nach einem der vorangehenden Ansprüche, **dadurch gekennzeichnet, daß** die Öffnung (38) zeitweilig verschließbar ist, wenn sie nicht genutzt wird.

10. Schließorgan nach dem vorangehenden Anspruch, **dadurch gekennzeichnet, daß** die Öffnung (38) von einer Tür (39) zeitweilig verschlossen ist.

11. Schließorgan nach dem vorangehenden Anspruch, **dadurch gekennzeichnet, daß** ein Klemmbock (31) mit der seitlichen Tür (39) verbunden ist.

12. Schließorgan nach einem der vorangehenden Ansprüche, **dadurch gekennzeichnet, daß** der Aufnahmeraum (30) ein Haltemittel (36) aufweist, welches zum Halten der Sonde (27) in der Meß- oder Detektierposition geeignet ist.

13. Schließorgan nach dem vorangehenden Anspruch, **dadurch gekennzeichnet, daß** das Haltemittel von einer Nut (36) gebildet ist, welche in der seitlichen Wandung des inneren Aufnahmeraumes (30) ausgespart ist.

14. Schließorgan nach einem der vorangehenden Ansprüche, **dadurch gekennzeichnet, daß** die Sonde (27) von einer Temperaturmeßsonde nach Art einer Kontaktsonde gebildet ist.

15. Schließorgan nach Anspruch 1, **dadurch gekennzeichnet, daß** die Sonde (27) ein Fühlerelement (28) sowie Leitungsdrähte (29) aufweist, und daß das Fühlerelement (28) im Innern des Verschlußkopfes (18) angeordnet ist und die Leitungsdrähte (29) durch den Schaft (17) des Schließelementes (16) gehen, wenn die Sonde in dem Aufnahmeraum (30) positioniert ist.

16. Schließorgan nach dem vorangehenden Anspruch, **dadurch gekennzeichnet, daß** das Fühler- oder Detektionselement (28) gegen die Innenfläche der oberen Wandung (32) des Verschlußkopfes (18) des Schließorgans (16) angeordnet ist, wenn die Sonde (27) in dem Aufnahmeraum (30) positioniert ist.

17. Schließorgan nach Anspruch 15, **dadurch gekennzeichnet, daß** das Fühler- oder Detektionselement (28) von einer nachgiebigen Umhüllung (33) verlängert ist, in deren Innern die Drähte (29) verlaufen, wobei die Umhüllung von einer komprimierbaren Spiralwicklung (34) gebildet ist.

18. Schließorgan nach dem vorangehenden Anspruch, **dadurch gekennzeichnet, daß** die Umhüllung (33) mit einem Stützkragen (35) endet.

19. Schließorgan nach den Ansprüchen 13, 16, 17 und 18, **dadurch gekennzeichnet, daß** der Stützkragen (35) und die Nut (36) zusammenwirken, um die Sonde (27) in dem Aufnahmeraum (30) zu halten und die Festlegung des Fühler- oder Detektionselementes (28) gegen die obere Wandung (32) des Verschlußkopfes (18) des Schließorgans (16) durch elastische Kompression der Spiralwicklungen (34) der Umhüllung (33) sicherzustellen.
